# EUROPÄISCHE PATENTSCHRIFT

(11) **EP 3 336 006 B1**
(45) Veröffentlichungstag und Bekanntmachung des Hinweises auf die Patenterteilung: **04.12.2019**
(21) Anmeldenummer: 17206079.0
(22) Anmeldetag: 08.12.2017
(51) Int. Cl.: B65D 75/30, B65D 81/24, B65D 81/26, B32B 1/00, B65D 65/40

(54) **VERWENDUNG EINER LEBENSMITTELVERPACKUNG**
USE OF FOOD PACKAGING
UTILISATION D'EMBALLAGES ALIMENTAIRES

(30) Priorität: 16.12.2016 DE 202016107092 U
(43) Veröffentlichungstag der Anmeldung: 20.06.2018
(73) Patentinhaber: Scheidt, Markus, 32120 Oetinghausen (DE)
(72) Erfinder: Scheidt, Markus, 32120 Oetinghausen (DE)
(74) Vertreter: Ter Meer Steinmeister & Partner

(56) Entgegenhaltungen:
- EP-A2- 0 339 593
- WO-A1-96/37419
- JP-A- 2008 155 952
- US-A- 3 744 627

## Beschreibung

Die Erfindung betrifft eine Verwendung einer im Extrusionsverfahren hergestellten Hohlkammer-Stegplatte aus Kunststoff, mit einer Gesamtdicke von weniger als 2 mm, als Lebensmittelverpackung für Fisch, bei der die Hohlkammer-Stegplatte eine plattenförmige, halbsteife Unterlage für die Lebensmittel bildet, und eine an der Unterlage gehaltene und die Lebensmittel überdeckende Abdeckung vorgesehen ist.

Bei herkömmlichen Verpackungen dieser Art besteht die Unterlage aus einer Pappe. Die Abdeckung wird zumeist durch eine transparente Folie gebildet.

Aus US 3 744 627 ist eine Lebensmittelverpackung bekannt, bei der die Unterlage durch ein Plattenförmiges, eine Vielzahl von Ausstülpungen aufweisendes Formteil aus Kunststoff gebildet wird.

Aus EP 0 339 593 ist eine Hohlkammer-Stegplatte aus Kunststoff bekannt die als Wandmaterial für Behälter für Lebensmittel verwendet wird.

Auch JP 2008 155952 A zeigt kastenförmige Lebensmittelbehälter, deren Wände durch Hohlkammer-Stegplatten aus Kunststoff gebildet werden.

Aufgabe der Erfindung ist es, eine Lebensmittelverpackung mit geringem Gewicht und gleichzeitig hoher Stabilität und Haltbarkeit und guter Lebensmittelverträglichkeit zu schaffen.

Diese Aufgabe wird erfindungsgemäß gelöst durch die Verwendung einer im Extrusionsverfahren hergestellten Hohlkammer-Stegplatte aus Kunststoff, mit einer Gesamtdicke von weniger als 2 mm, als Lebensmittelverpackung für Fisch, bei der die Hohlkammer-Stegplatte eine plattenförmige, halbsteife Unterlage für die Lebensmittel bildet, und eine an der Unterlage gehaltene und die Lebensmittel überdeckende Abdeckung vorgesehen ist.

Aufgrund der Hohlkammerstruktur weist die Unterlage im Verhältnis zu ihrem Gewicht eine hohe Verformungssteifigkeit auf, so dass sie widerstandsfähig gegen mechanische Beschädigungen ist. Darüber hinaus ist die Hohlkammer-Stegplatte beständig gegen Flüssigkeiten ohne dass eine besondere Oberflächenbehandlung erforderlich ist, und sie gibt der Verpackung ein ansprechendes und hochwertiges Erscheinungsbild.

Vorteilhafte Ausgestaltungen der Erfindung sind in den Unteransprüchen angegeben.

In einer Ausführungsform weist die Hohlkammer-Stegplatte eine Mikroperforation auf, wodurch eine gewisse Luftdurchlässigkeit und Atmungsaktivität erreicht wird. Vorzugsweise ist in jeder der beiden Wände, die eine einzelne Hohlkammer nach außen begrenzen, mindestens eine Reihe von Mikroporen vorgesehen, die einen Durchmesser von beispielsweise 0,2 bis 1,0 mm haben können. Die Poren können beispielsweise in einem quadratischen Raster angeordnet sein, mit einem Porenabstand in der Größenordnung von etwa 3 bis 5 mm.

Die Hohlkammer-Stegplatten können beispielsweise zunächst ohne Mikroperforation im Extrusionsverfahren aus Kunststoff hergestellt werden. In einem weiteren Schritt lässt man dann das extrudierte Profil durch einen Spalt zwischen zwei Perforationswalzen laufen, mit denen die Mikroporen in den Außenwänden der Platten hergestellt werden.

Ein besonders geeignetes Kunststoffmaterial für die Hohlkammer-Stegplatte ist Polypropylen, das wahlweise geeignet eingefärbt sein kann, beispielsweise in dem für Fischverpackungen üblichen Goldton.

Im folgenden wird ein Ausführungsbeispiel anhand der Zeichnung näher erläutet. Es zeigen:
- Fig. 1: eine perspektivische Ansicht einer erfindungsgemäßen Verwendung einer Lebensmittelverpackung; und
- Fig. 2: einen vergrößerten Schnitt längs der Linie II-II in Fig. 1.

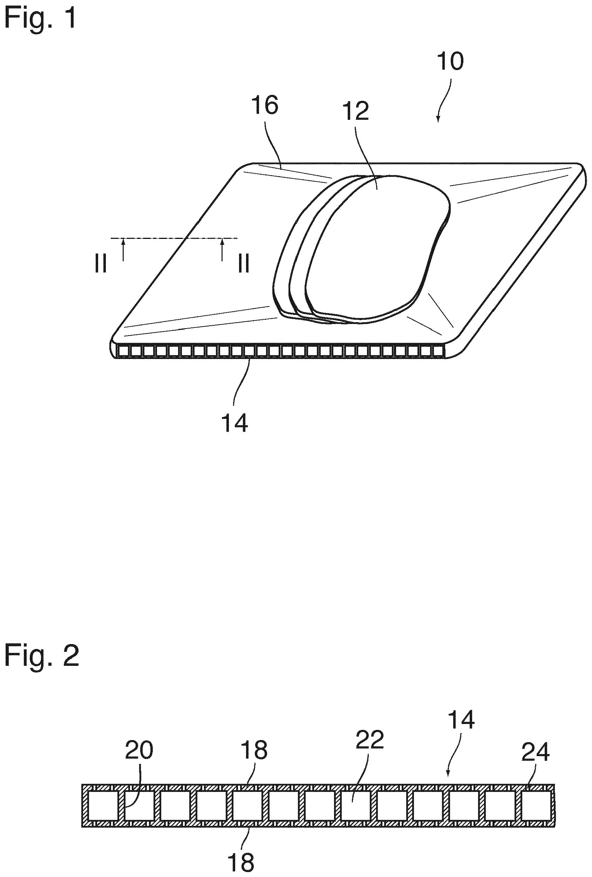

In Fig. 1 ist eine Verpackung 10, beispielsweise für Räucherlachs 12 gezeigt, die eine plattenförmige Unterlage 14 und eine folienartige Abdeckung 16 aufweist.

Die Unterlage 14 wird durch eine mikroperforierte Hohlkammer-Stegplatte aus Polypropylen gebildet und hat eine rechteckige Form mit verrundeten Ecken.

Fig. 3 zeigt einen vergrößerten Teilschnitt durch die Hohlkammer-Stegplatte, die die Unterlage 14 bildet. Die Stegplatte weist zwei parallele Wände 18 auf, von denen eine die Auflagefläche für den Fisch bildet. Die Wände 18 sind in regelmäßigen Abständen durch Stege 20 miteinander verbunden, die materialeinheitlich an die Wände 18 anschließen und den Zwischenraum zwischen diesen Wänden in eine Serie von Hohlkammern 22 mit einem beispielsweise quadratischen Querschnitt unterteilen. Innerhalb jeder Hohlkammer 22 weisen die beiden Wände 18 jeweils mindestens eine Reihe von Mikroporen 24 auf.

Die Mikroporen haben in diesem Beispiel einen Durchmesser von etwa 0,2 mm. Die Gesamtdicke der Stegplatte, also der Abstand zwischen den Wänden 18 beträgt weniger als 2 mm, beispielsweise etwa 1 - 1,5 mm, so dass die Platte trotz der Verstärkung durch die Stege noch ähnlich flexibel ist wie etwa eine Pappe.

Die gesamte Unterlage 14 ist vorzugsweise in einem Stück aus Kunststoff, vorzugsweise aus Polypropylen hergestellt.

## Patentansprüche

1. Verwendung einer im Extrusionsverfahren hergestellten Hohlkammer-Stegplatte aus Kunststoff, mit einer Gesamtdicke von weniger als 2 mm, als Lebensmittelverpackung für Fisch (12), bei der die Hohlkammer-Stegplatte eine plattenförmige, halbsteife Unterlage (14) für die Lebensmittel bildet, und eine an der Unterlage gehaltene und die Lebensmittel überdeckende Abdeckung (16) vorgesehen ist.

2. Verwendung nach Anspruch 1, bei dem die Hohlkammer-Stegplatte Mikroporen (24) in ihren beiden parallelen, durch Stege (20) verbundenen Wänden (18) aufweist.

3. Verwendung nach Anspruch 2, bei der die Mikroporen (24) einen Durchmesser von 1,0 mm oder weniger, vorzugsweise einen Durchmesser von 0,2 mm haben.

4. Verwendung nach einem der Ansprüche 1 bis 3, bei dem die Hohlkammer-Stegplatte aus Polypropylen besteht.

## Claims

1. Use of a chambered multi-wall sheet of plastics that is obtained by extrusion and has a total thickness of less than 2mm as food packaging for fish (12), wherein the chambered multi-wall sheet constitutes a plate-like semi-rigid support (14) for the food, and there is provided a cover (16) that is covering the food and is held on the support.

2. Use according to claim 1, wherein the chambered multi-wall sheet has micro-pores (24) in its two parallel walls (18) that are interconnected by webs (20).

3. Use according to claim 2, wherein the micro-pores (24) have a diameter of 1.0 mm or less, preferably a diameter of 0.2 mm.

4. Use according to any of the claims 1 to 3, wherein the chambered multi-wall sheet is made of polypropylene.

## Revendications

1. Utilisation d'une plaque alvéolaire à chambres creuses en matière plastique fabriquée par extrusion, avec une épaisseur totale inférieure à 2 mm, en tant qu'emballage alimentaire pour du poisson (12), dans laquelle la plaque alvéolaire à chambres creuses forme un support (14) pour les aliments en forme de plaque semi-rigide et un couvercle (16) maintenu sur le support et recouvrant les aliments est prévu.

2. Utilisation selon la revendication 1, dans laquelle la plaque alvéolaire à chambres creuses comprend des micro-pores (24) dans ses deux parois (18) parallèles reliées par des nervures (20).

3. Utilisation selon la revendication 2, dans laquelle les micro-pores (24) présentent un diamètre de 1,0 mm ou moins, de préférence un diamètre de 0,2 mm.

4. Utilisation selon l'une des revendications 1 à 3, dans laquelle la plaque alvéolaire à chambres creuses est constituée de polypropylène.
